# EUROPEAN PATENT APPLICATION

(11) **EP 2 164 285 A2**
(43) Date of publication of application: **17.03.2010**
(21) Application number: 10150001.5
(22) Date of filing: 06.07.2006
(51) Int. Cl.: H04W 8/08, H04W 80/04

(54) **Mobile ip route optimisation in ip version transition scenarios**

(30) Priority: 29.05.2006 EP 06011019
(62) Divisional of application: 06014072.0
(71) Applicant: Panasonic Corporation, Kadoma-shi Osaka 571-8501 (JP)
(72) Inventor: Weniger, Kilian, 63225, Langen (DE); Bachmann, Jens, 63225, Langen (DE); Schuringa, Jon, 63225, Langen (DE)
(74) Representative: Grünecker, Kinkeldey, Stockmair & Schwanhäusser Anwaltssozietät

(57) **Abstract**

The invention relates to a method for routing packets in a system of packet- switched networks using different internet protocol versions. The system comprises a plurality of home agents, at least one mobile node and at least one correspondent node. A first mobile node is configured with at least one topologically correct internet protocol address of a first internet protocol version and is located in a network supporting at least routing of packets having a header of the first internet protocol version. A first of the plurality of home agents is located in proximity to a direct path between the first mobile node and the first correspondent node, the first home agent being located in a network supporting at least the routing of packets to the first mobile node with the packets having a header of the first internet protocol version and the routing of packets to the first correspondent node with the packets having a header of the second internet protocol version.

## Description

### Field of the Invention

The invention relates to optimized routing in mobile packet-based communication networks, especially regarding IP version transition issues. It describes a system and method to support Mobile IP route optimization in certain IP version transition scenarios.

### Technical Background

Communications systems evolve more and more towards an Internet Protocol (IP)-based network. They consist of many interconnected networks, in which speech and data is transmitted from one terminal to another terminal in pieces, so-called packets. Those packets are routed to the destination by routers in a connection-less manner. Therefore, packets consist of IP header and payload information and the header comprises among other things source and destination IP address. For scalability reasons an IP network uses a hierarchical addressing scheme. Hence, an IP address does not only identify the corresponding terminal, but additionally contains location information about this terminal. With additional information provided by routing protocols, routers in the network are able to identify the next router towards a specific destination.

If a terminal is mobile, from now on called Mobile Node (MN), and moves between subnets, it must change its IP address to a topological correct one because of the hierarchical addressing scheme. However, since connections on higher-layers such as TCP connections are defined with the IP addresses (and ports) of the communicating nodes, the connection breaks if one of the nodes changes its IP address, e.g., due to movement.

Mobile IPv6 [D. Johnson, C. Perkins, J. Arkko, "Mobility Support in IPv6", IETF RFC 3775, June 2004] is an IP-based mobility protocol that enables MNs to move between subnets in a manner transparent for higher layers and applications, i.e. without breaking higher-layer connections. Therefore, a MN has two IP addresses configured: a Care-of-Address (CoA) and a Home Address (HoA). The MN's higher layers use the HoA for communication with the communication partner (destination terminal), from now on called Corresponding Node (CN). This address does not change and serves the purpose of identification of the MN. Topologically, it belongs to the Home Network (HN) of the MN. In contrast, the CoA changes on every movement resulting in a subnet change and is used as the locator for the routing infrastructure. Topologically, it belongs to the network the MN is currently visiting. One out of a set of Home Agents (HA) located on the home link maintains a mapping of the MN's CoA to MN's HoA and redirects incoming traffic for the MN to its current location. Reasons for having a set of HAs instead of a single HA are redundancy and load balancing.

Mobile IPv6 currently defines two modes of operation: bi-directional tunnelling and route optimization. If bi-directional tunnelling is used, data packets sent by the CN and addressed to the HoA of the MN are intercepted by the HA in the HN and tunnelled to CoA of the MN. Data packets sent by the MN are reverse tunnelled to the HA, which decapsulates the packets and sends them to the CN. For this operation, only the HA must be informed about the CoA of the MN. Therefore, the MN sends Binding Update (BU) messages to the HA. These messages are sent over an IPsec security association and thus are authenticated and integrity protected. Since the CN is not aware of the CoA of the MN, it cannot derive the location of the MN and, thus, location privacy is provided. However, if the MN is far away from the home network and the CN is close to the MN, the communication path is unnecessarily long, resulting in inefficient routing and high packet delays.

The route optimization mode can prevent this inefficiency by using the direct (end-to-end) path between CN and MN. Therefore, the MN sends BU messages to the CN, which then is able to directly send data packets to the MN (a type 2 routing header is used to send the packets on the direct path). Of course, the CN has to implement Mobile IPv6 route optimization support. To authenticate the BU message, the MN and the CN perform a so-called return routability procedure, which tests the reachability of the MN at the HoA and CoA and generates a shared session key.

Recently, Mobile IPv6 has been extended to enable MNs to dynamically bootstrap with HAs [G. Giaretta, J. Kempf, V. Devarapalli, "Mobile IPv6 bootstrapping in split scenario", draft-ietf-mip6-bootstrapping-split-02.txt, March 2006]. Bootstrapping includes discovering a HA, configuring a corresponding HoA, and setting up IPsec security associations with this HA. A MN can bootstrap with a local HA to optimize the route in bi-directional tunnelling mode. However, this potentially breaks location privacy support, since the HoA (which is usually known by CN) now contains location information. For instance, if the CN knows that the HA is local to the MN (e.g., it is the operator's policy to bootstrap with local HAs), it can deduce the MN's location based on the MN's HoA. Furthermore, changing the HA by bootstrapping requires changing the HoA, which means that ongoing data sessions would break. Hence, route optimization of ongoing data sessions is not supported.

The network operators cannot switch all terminals and network equipment to IPv6 in a coordinate effort at a single moment. Instead, the transition from IPv4 to IPv6 will happen slowly. The strategy recommended by the IETF (Internet Engineering Task Force) is to use dual stack nodes, i.e., hosts and servers implement both an IPv4 and an IPv6 stack (R. Gilligan, E. Nordmark, "Transition Mechanisms for IPv6 Hosts and Routers", RFC 2893, August 2000). Hence, access networks can be IPv4-only, IPv6-only or support both, from now on called dual.

The Mobile IPv6 protocol as described in RFC 3775 is not IP version agnostic, i.e., HA, MN, and CN as well as the networks they are connected to must support IPv6. And running Mobile IPv4 and Mobile IPv6 simultaneously on every host does not support session continuity when the MN moves from a IPv4-only network in an IPv6-only network or vice versa. Furthermore, this would not be efficient in terms of signalling traffic [G. Tsirtsis, H. Soliman, "Mobility management for Dual stack mobile nodes: A Problem Statement", draft-ietf-mip6-dsmip-problem-02.txt, June 2006]. Hence, extensions for Mobile IPv6 are under development to support session continuity and IP reachability using Mobile IPv6 signaling messages even if the Mobile Node moves in an IPv4 network [H. Soliman, G. Tsirtsis, V. Devarapalli, J. Kempf, H. Levkowetz, P. Thubert, R. Wakikawa, "Mobile IPv6 support for dual stack Hosts and Routers (DSMIPv6)", draft-ietf-mip6-nemo-v4traversal-01.txt, March 2006]. This extension is from now on called "Dual Stack Mobile IP (DSMIP)".

The draft specifies how a dual stack MN can register IPv4 home and/or care-of addresses with a dual stack Mobile IPv6 HA using Mobile IPv6 signalling. Further, it describes how IPv4 or IPv6 packets can be transported between MN and HA using IPv6-in-IPv4 encapsulation. It is also described how to detect and handle NAT (Network Address Translator) routers that are located between MN and HA.

However, route optimization is not possible in some scenarios, even though route optimization is a very important feature for delay-sensitive services. This invention describes a system and method to support Mobile IP route optimization in certain IP version transition scenarios without changing the CN operation and implementation.

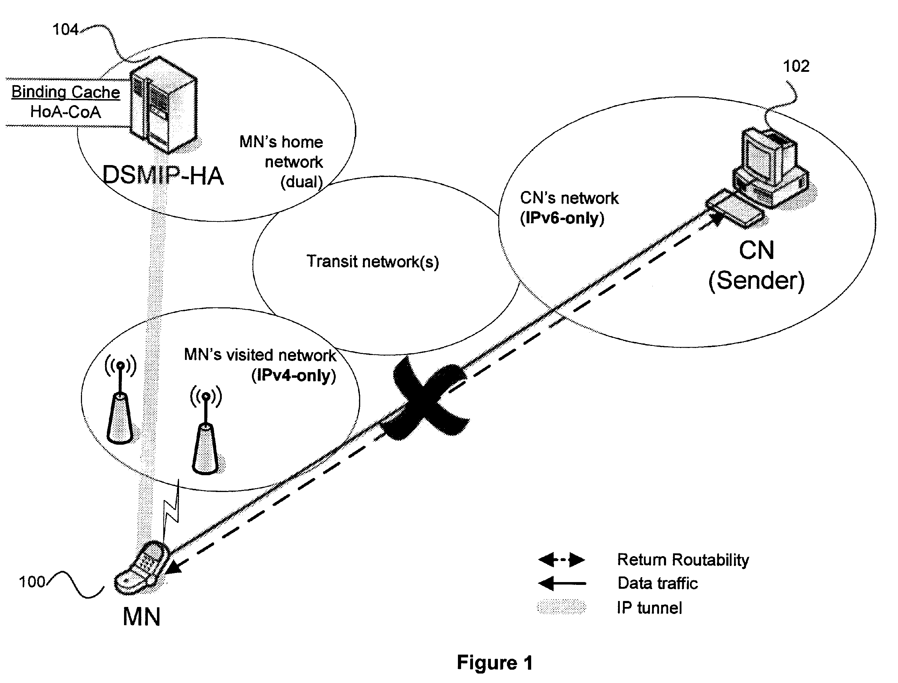

More specifically, end-to-end communication between MN and CN is not possible, if both nodes or the networks to which those nodes are connected do not understand the same IP version. However, Mobile IPv6 route optimization requires end-to-end signalling between MN and CN. For instance, if a dual stack MN is in an IPv4-only network and a dual stack CN in an IPv6-only network, end-to-end communication between MN and CN is not possible. The reason is that no matter which IP version MN and CN choose, one of the networks (more specifically, the routing infrastructures in the networks) does not support the IP version (see Figure 1). If the CN network is dual, end-to-end communication is possible, but not with standard Mobile IPv6 (RFC 3775) or DSMIP (draft-ietf-mip6-nemo-v4traversal-01.txt) behaviour, i.e., only when CN operation were to be extended.

Additional changes are needed if MN is behind a NAT. In this case, the CN must be able to detect the NAT router on the path and inform the MN to encapsulate all signalling messages into UDP (User Datagram Protocol). In such scenarios, the current solution is to reverse tunnel to a dual stack HA, which can lead to high data packet delays and bad user experience when the MN is far away from its home network.

In US20050083969 a method is described that enables a MN located in a IPv6 network to communication with a CN in an IPv4 network using Mobile IPv6 route optimization mode. The idea is to utilize a NAT-PT (RFC2766) box located at the edge of the network, which intercepts return routability packets, BU (Binding Update) messages and data packets. It converts IP headers from IPv6 to IPv4 and acts as agent for the CN with respect to the return routability procedure, i.e., from MN perspective, the NAT-PT behaves like an IPv6 CN. Therefore, the NAT-PT stores binding and keying information and replies to HoTi, CoTi and BU messages.

Drawbacks of this approach are that a special NAT-PT box must always exist at the edge of each access network and that such box must always be located on the end-to-end path between MN and CN. However, this cannot always be guaranteed. Furthermore, the box must be extended to support return routability signalling. Finally, protocol translation has quite a lot of limitations. First, the translation (incl. calculation of checksums etc) consumes processing power. Second, topology limitations exist, as stated above. Third, the translation itself has limitations, since the semantics of some fields in IPv4 and IPv6 headers are quite different. Forth, IP addresses carried in higher layers are not translated without additional application gateway functionality and end-to-end security cannot be established. For all these reason, the NAT-PT specification recommends to only use NAT-PT if no other means of communication such as IPv6 over IPv4 tunnelling is possible.

### Summary of the Invention

The present invention has been made in consideration of the above situation and has as its object to provide optimised routing of data in an IPv4 traversal scenario.

This object is solved by the subject matter of the independent claims. Advantageous embodiments of the invention are subject matters to the dependent claims.

To achieve this object the present invention provides a method, apparatus, system and computer-readable medium for routing packets in a system of packet-switched networks using different internet protocol versions comprising a plurality of home agents, at least one mobile node and at least one correspondent node. A first mobile node is configured with at least one topologically correct internet protocol address of a first internet protocol version and is located in a network supporting at least routing of packets with a header of the first internet protocol version. A communication is requested with a first correspondent node being configured with at least an internet protocol address of a second internet protocol version and being located in a network supporting at least the routing of packets having a header of the second internet protocol version, by an application on the first mobile node. A first of the plurality of home agents is located in proximity to a direct path between the first mobile node and the first correspondent node, the first home agent being located in a network supporting at least the routing of packets to the first mobile node with the packets having a header of the first internet protocol version and the routing of packets to the first correspondent node with the packets having a header of the second internet protocol version. Bootstrapping is carried out with the first home agent to obtain a first home address of the second internet protocol version and other communication parameters. The first mobile node's location is registered with the first home agent by sending a first binding update message comprising a first mobile node's topologically correct address of the first internet protocol version as care-of address and the first home address as home address; and the first home agent is used in bi-directional tunnelling mode, the outer header of the tunnelled packets using the first internet protocol version and the inner header of the tunnelled packets using the second internet protocol version, for communication with the first correspondent node, with the communication parameters set up in the bootstrapping step and the first home address as home address.

In an advantageous embodiment the step of bootstrapping with the first home agent is carried out by the first mobile node or by a proxy node on behalf of the first mobile node.

In a further embodiment the step of registering the first mobile node's location with the first home agent is carried out by the first mobile node or by a proxy node on behalf of the first mobile node.

According to another advantageous embodiment of the invention the step of locating the first of the plurality of home agents is carried out by the first mobile node or by a proxy node on behalf of the first mobile node.

It is an advantage that the first home agent is situated closer to the first correspondent node than to the first mobile node.

In an advantageous embodiment of the invention the step of locating the first of the plurality of home agents comprises querying a domain name server for a home agent address, the domain name being constructed from at least the first correspondent node's domain name and a string that indicates that a home agent supporting the routing of packets having the header of the first internet protocol version and packets having the header of the second internet protocol version is required, to find an address of the first home agent.

In a further advantageous embodiment the step of locating the first of the plurality of home agents comprises the steps of setting a flag in a first request message to indicate that a home agent supporting the routing of packets having the header of the first internet protocol version and packets having the header of the second internet protocol version is required; setting the destination address in the internet protocol header of the first request message to an anycast address constructed from at least the first correspondent node's address prefix; setting the source address in the internet protocol header of the first request message to the home address corresponding to the second home agent; reverse tunnelling the first request message to a second of the plurality of home agents supporting the routing of packets having the header of the first internet protocol version and packets having the header of the second internet protocol version, the first mobile node being registered with the second home agent and the second home agent located anywhere in system of packet-switched networks; and replying by one of the plurality of home agents to the request with an address of the first home agent.

A further embodiment of the invention has the step of locating (404) the first of the plurality of home agents comprising the steps of sending a request containing information about the first correspondent node and an indication that a home agent supporting the routing of packets having the header of the first internet protocol version and packets having the header of the second internet protocol version is required to a dedicated network entity; and receiving a reply from the dedicated network entity with an address of the first home agent.

Another advantageous embodiment of the invention comprises the following steps carried out by the dedicated network entity: mapping an address of the first correspondent node to an address of one of a plurality of home agents supporting the routing of packets having the header of the first internet protocol version and packets having the header of the second internet protocol version and located close to the first correspondent node.

It is an advantage that the mapping is pre-configured or dynamically discovered.

In a further embodiment of the invention the step of locating the first of the plurality of home agents comprises the steps of: setting a flag in a first dynamic host configuration protocol request message to indicate that a home agent supporting the routing of packets having the header of the first internet protocol version and packets having the header of the second internet protocol version is required; sending the first dynamic host configuration protocol request message to locate the first home agent; sending by a dynamic host configuration protocol server a dynamic host configuration protocol reply containing an address of the first home agent; wherein, if the first home agent is in a different network to the first mobile node the first dynamic host configuration protocol message sent by the first mobile node contains the address of the first correspondent node

According to another embodiment of the invention the first home agent is re-used in a subsequent communication sessions with the same or other correspondent nodes in the same or a nearby domain by skipping the locating and the bootstrapping steps.

In a further advantageous embodiment of the invention a method for routing packets in a system of packet-switched networks using different internet protocol versions comprising a plurality of home agents, at least one mobile node and at least one correspondent node is described. A first mobile node is configured with at least one topologically correct internet protocol address of a first internet protocol version and a first home address of a second internet protocol version and is located in a network supporting at least routing of packets having a header of the first internet protocol version. An application on a first correspondent node being configured with at least an internet protocol address of a second internet protocol version and being located in a network supporting at least the routing of packets having a header of the second internet protocol version starts a communication session with the first mobile node by sending data packets having a header of the second internet protocol version to the first mobile node's first home address, the first home address and a first of mobile node's topologically correct addresses being registered at a first home agent. The mobile node receives first data packets from the first correspondent node tunnelled over the first home agent. A second of the plurality of home agents is located in proximity to a direct path between the first mobile node and the first correspondent node, the second home agent being located in a network supporting at least the routing of packets to the first mobile node with the packets having a header of the first internet protocol version and the routing of packets to the first correspondent node with the packets having a header of the second internet protocol version. Bootstrapping is carried out with the second home agent to obtain a second home address of the second internet protocol version and other communication parameters. The first mobile node's location is registered with the second home agent by sending a first binding update comprising the first mobile node's topologically correct address of the first internet protocol version as care-of address and the second home address as home address. A first care-of-test init message is sent to the first correspondent node over a bi-directional tunnel to the second home agent, the outer header of the tunnelled packets using the first internet protocol version and the inner header of the tunnelled packets using the second internet protocol version, with a source address in the internet protocol header of the first care-of-test init message set to the second home address. A care-of-test message is received from the first correspondent node over the bi-directional tunnel to the second home agent. The first mobile node's location is registered with the first correspondent node by sending a second binding update message comprising the second home address as care-of address and the first home address as home address, the second binding update message sent over the bi-directional tunnel to the second home agent, the outer header of the tunnelled packets using the first internet protocol version and the inner header of the tunnelled packets using the second internet protocol version; and the route optimization mode is used over the bi-directional tunnel to the second home agent, the outer header of the tunnelled packets using the first internet protocol version and the inner header of the tunnelled packets using the second internet protocol version, for communication between the first mobile node and the first correspondent node with the communication parameters set up in the bootstrapping step by sending data packets destined for the first correspondent node by the first mobile node over the bi-directional tunnel to the second home agent, the data packets in the tunnel comprising the first home address in a home address option, the second home address as source address in the internet protocol header and the first correspondent node's address as destination address in the internet protocol header.

In a further advantageous embodiment the first binding update message is encapsulated in a user datagram protocol message when a network address translation router is on the path to support network address translation traversal.

According to another embodiment of the invention the first binding update message is encapsulated in a message of the first internet protocol version.

In another advantageous embodiment the first home agent detects a network address translation router on the direct path and informs the first mobile node of this.

It is an advantage of the present invention that the first internet protocol version is IPv4 and the second internet protocol version is IPv6 or IPv4.

In another embodiment of the invention the method steps are triggered if the network of the first mobile node and the network of the first correspondent node do not support the same internet protocol version.

In a further advantageous embodiment the steps are triggered if the first mobile node runs an application that requires short packet delays.

Another advantageous embodiment of the present invention concerns a mobile node in a system of packet-switched networks using different internet protocol versions comprising a plurality of home agents and at least one correspondent node. The mobile node is configured with at least one topologically correct internet protocol address of a first internet protocol version and is located in a network supporting at least routing of packets having a header of the first internet protocol version. The mobile node comprises: an application adapted to request communication with a first correspondent node being configured with at least an internet protocol address of a second internet protocol version and being located in a network supporting at least the routing of packets having a header of the second internet protocol version; locating means to locate a first of the plurality of home agents in proximity to a direct path between the mobile node and the first correspondent node, the first home agent being located in a network supporting at least the routing of packets to the mobile node with the packets having a header of the first internet protocol version and the routing of packets to the first correspondent node with the packets having a header of the second internet protocol version; bootstrapping means adapted to bootstrap with the first home agent to obtain a first home address of the second internet protocol version and other communication parameters; transmission means adapted to send a first binding update message comprising the mobile node's topologically correct address of the first internet protocol version as care-of address and the first home address as home address; and communication means adapted to use the first home agent in bi-directional tunnelling mode, the outer header of the tunnelled packets using the first internet protocol version and the inner header of the tunnelled packets using the second internet protocol version, for communication with the first correspondent node, with the communication parameters set up in the bootstrapping step and the first home address as home address.

According to a further advantageous embodiment a system of packet-switched networks using different internet protocol versions comprising a plurality of home agents, at least one mobile node and at least one correspondent node, a first mobile node being configured with at least one topologically correct internet protocol address of a first internet protocol version and being located in a network supporting at least routing of packets having a header of the first internet protocol version. The system comprises: an application on the first mobile node adapted to request communication with a first correspondent node being configured with at least an internet protocol address of a second internet protocol version and being located in a network supporting at least the routing of packets having a header of the second internet protocol version; locating means to locate a first of the plurality of home agents in proximity to a direct path between the first mobile node and the first correspondent node, the first home agent being located in a network supporting at least the routing of packets to the first mobile node with the packets having a header of the first internet protocol version and the routing of packets to the first correspondent node with the packets having a header of the second internet protocol version; bootstrapping means adapted to bootstrap with the first home agent to obtain a first home address of the second internet protocol version and other communication parameters; registration means adapted to register the first mobile node's location with the first home agent by sending a first binding update message comprising the mobile node's topologically correct address of the first internet protocol version as care-of address and the first home address as home address; and wherein the first home agent is adapted to be used in a bi-directional tunnelling mode, the outer header of the tunnelled packets using the first internet protocol version and the inner header of the tunnelled packets using the second internet protocol version, for communication with the first correspondent node, with the communication parameters set up in the bootstrapping step and the first home address as home address.

According to another embodiment of the invention a computer readable medium stores instructions that, when executed by a processor of a mobile node in a system of packet-switched networks using different internet protocol versions comprising a plurality of home agents and at least one correspondent node, the mobile node being configured with at least one topologically correct internet protocol address of a first internet protocol version and being located in a network supporting at least routing of packets having a header of the first internet protocol version cause the mobile node to carry out the following steps: requesting communication with a first correspondent node being configured with at least an internet protocol address of a second internet protocol version and being located in a network supporting at least the routing of packets having a header of the second internet protocol version, by an application on the first mobile node, locating a first of the plurality of home agents in proximity to a direct path between the mobile node and the first correspondent node, the first home agent being located in a network supporting at least the routing of packets to the mobile node with the packets having a header of the first internet protocol version and the routing of packets to the first correspondent node with the packets having a header of the second internet protocol version; bootstrapping with the first home agent to obtain a first home address of the second internet protocol version and other communication parameters; sending a first binding update message comprising a first mobile node's topologically correct address of the first internet protocol version as care-of address and the first home address as home address; and using the first home agent in bi-directional tunnelling mode, the outer header of the tunnelled packets using the first internet protocol version and the inner header of the tunnelled packets using the second internet protocol version, for communication with the first correspondent node, with the communication parameters set up in the bootstrapping step and the first home address as home address.

### Brief Description of the Figures

Further features and advantages will become apparent from the following and more particular description of the various embodiments of the invention as illustrated in the accompanying drawings, wherein:
Figure 1 shows a prior art IP version transition scenario in which end-to-end communication between MN and CN is not possible;
Figure 2 depicts data path and addresses in IP headers for IPv4 traversal in the MN-initiated cases;
Figure 3 shows data path and addresses in IP headers for IPv4 traversal in the CN-initiated case;
Figure 4 is a flow chart fro the MN initiated case; and
Figure 5 is a flow chart for the CN initiated case.

### Detailed Description of the Invention

The following paragraphs will describe various embodiments of the invention including the procedure to solve the given problem, described for MN-initiated and CN-initiated sessions, respectively.
For exemplary purposes only, most of the embodiments are outlined in relation to a communication system with both IPv4 and IPv6 networks, and the terminology used in the subsequent sections mainly relates to the IPv4 and IPv6 terminology. However, the used terminology and the description of the embodiments with respect to a IPv4 and IPv6 architecture is not intended to limit the principles and ideas of the inventions to such systems.

Also, the detailed explanations given in the technical background section above are merely intended to better understand the mostly IPv4 and IPv6 specific exemplary embodiments described in the following, and should not be understood as limiting the invention to the described specific implementations of processors and functions in an IPv4 or IPv6 network.

The invention is based on the DSMIP protocol. The first key idea of this invention is to discover and bootstrap with a DSMIP-capable HA, which is located close to the direct path between MN and CN, and use this HA in bi-directional tunnelling mode with IPv4 encapsulation when communicating with the corresponding CN for providing optimized routing. In the MN-initiated scenario, this already solves the problem of simultaneous IPv4 traversal and optimized routing.

In the more challenging CN-initiated scenario this is not enough, since the MN usually does not know in advance that a CN will start sending data to the MN and which CN will do so. To solve the problem in this scenario, the main idea is to permanently keep one HA and the corresponding HoA for reachability (i.e., being able to receive packets from CNs) and bootstrap with a second DSMIP-capable HA to achieve optimized routing with a specific CN. In order to move the Mobile IP data session from the first HA to the second HA, the MN executes the route optimization mode over the bi-directional tunnel with IPv4 encapsulation to the second HA and the CoA in route optimization mode is set to the second HoA. Using route optimization mode over bi-directional tunnelling and using a HoA (corresponding to the reverse tunnel to the second HA) as CoA in CoT/CoTi/BU messages to CN is considered to be the second key idea of this invention. Since the DSMIP solution is re-used, NAT detection and handling is supported as well.

The invention is described separately for the case that the MN and the CN initiates the communication session, respectively. Note that it is assumed that the MN decides to use optimized routing for a specific session before initiating that session. If the MN decides to optimize an existing session, the procedures described for the CN-initiated case apply.

The assumed scenario is that a dual stack MN has moved in an IPv4-only network and an IPv6-only or dual stack CN is located in a IPv6-only or dual stack or IPv4-only network. The HA is DSMIP-capable and as such dual stacked and located in a dual stack network.

The problem this invention solves is to support optimized routing in such IPv4 traversal scenarios. Optimized routing shall be supported in both cases MN- and CN-initiated communication sessions.

The invention described in the following does not use protocol translation and hence can avoid the issues listed above.

### MN-initiated communication sessions

If the MN initiates the communication with the CN and decides to use optimized routing with this CN, it is free to choose a HA and a corresponding HoA for the communication with the CN, if it is already registered with multiple HAs and has multiple HoAs (either IPv4 or IPv6) configured. The idea in providing optimized routing is to discover and bootstrap with a DSMIP-capable HA which is located close to the direct path between MN and CN and use this HA in bi-directional tunnelling mode for IPv4 traversal to the CN. Since such a HA is primarily used for optimized routing with a specific CN, we call it "Route Optimization" (RO)-HA. The corresponding HoA as well as the CN address can either be an IPv4 or an IPv6 address, whereas the CoA is an IPv4 address.

Bootstrapping is done as described in G. Giaretta, J. Kempf and V. Devarapalli ("Mobile IPv6 bootstrapping in split scenario", draft-ietf-mip6-bootstrapping-split-02.txt, March 2006) as summarized above, maybe extended by IPv4 encapsulation of signalling messages to support IPv4 traversal. The MN may be registered with one or more HAs before bootstrapping with the RO-HA.

One way to discover a RO-HA would be to use location-dependent HA discovery as mentioned in G. Giaretta, J. Kempf and V. Devarapalli ("Mobile IPv6 bootstrapping in split scenario", draft-ietf-mip6-bootstrapping-split-02.txt, March 2006). E.g., if the CN's host name is "cn.eu.panasonic.com", the MN may query DNS for "ha_dsmip6.eu.panasonic.com" or "_dsmip6._ipv6.eu.panasonic.com" to obtain a RO-HA address, in this case an address of a DSMIP-capable HA that is located in the same domain as the CN.

A second way to discover a RO-HA address is to use anycast-based HA discovery such as "Dynamic Home Agent Address Discovery (DHAAD)" as specified in RC3775. The MN would therefore send a request to an anycast address, which it constructs based on the CN's address prefix and a HA in CN's network would reply to this requests. An additional flag can indicate that a DSMIP-capable HA is required. However, a problem is that anycast is not supported in IPv4 networks. Hence, the MN would reverse tunnel the anycast message to one of its DSMIP-HAs using IPv4 encapsulation, if the MN is located in a IPv4 network. It would then use the corresponding HoA as source address.

A third way is to introduce a dedicated network entity (server) that is able to map a CN address to one or more addresses of DSMIP-HAs which are located close to the path between MN and CN. These mappings can be pre-configured by the network operator or dynamically discovered, e.g., with the mechanisms described above. The MN would then send a request to this network entity and receive a reply with the RO-HA address.

A fourth way to discover the RO-HA would be to get this information from DHCP servers similar to the method described in (K. Chowdhury, A. Yegin, "MIP6-bootstrapping via DHCPv6 for the Integrated Scenario", draft-ietf-mip6-bootstrapping-integrated-dhc-01.txt, Jun 2006) and (H. J. Jang, A. Yegin, J, Choi, K. Chowdhury, "DHCP Option for Home Information Discovery in MIPv6", draft-jang-mip6-hiopt-00.txt, June 2006), but extended by the information (e.g., flag) that a DSMIP-capable HA is required. The RO-HA can be local to the MN or further away from the MN. For the former case, no further extensions to DHCP messages are necessary. For the latter case, DHCP messages sent by the MN may contain the CN address in a new option and the DHCP server replies with an address of a HA located close to the path between MN and CN. The reply can be any DHCP message with a new option.

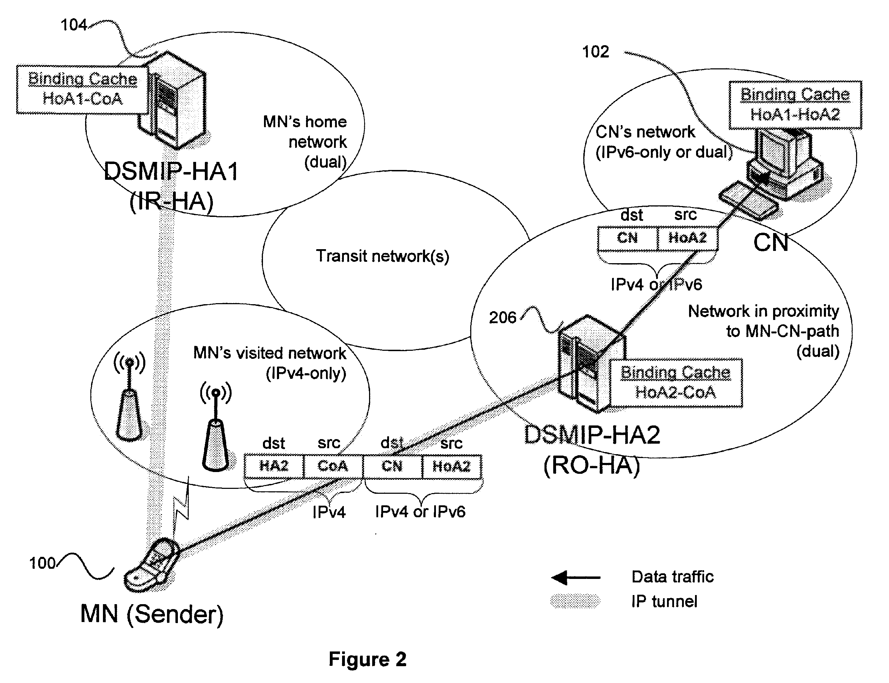

Figure 2 shows an example with data path and addresses in IP headers. The MN 100 was registered with HA1 104 and was configured with HoA1 before initiating communication with CN 102. After an application requests a communication session with CN 102, the MN 100 discovers and bootstraps with the RO- HA "HA2" 206, configures a corresponding HoA ("RO-HoA" or "HoA2") and uses it for communication with CN 102 in bi-directional tunnelling mode. Therefore, the MN 100 tunnels data packets to HA2 206 using IPv4 encapsulation, which decapsulates and sends them to CN 102. The data packets can be either IPv4 or IPv6.

When CN 102 replies, it sends packets to MN's RO-HoA (HoA2) 206, which are routed to RO-HA (HA2) 206 and tunnelled to MN 100 using IPv4 encapsulation. HoA1 104 is not used in this communication session.

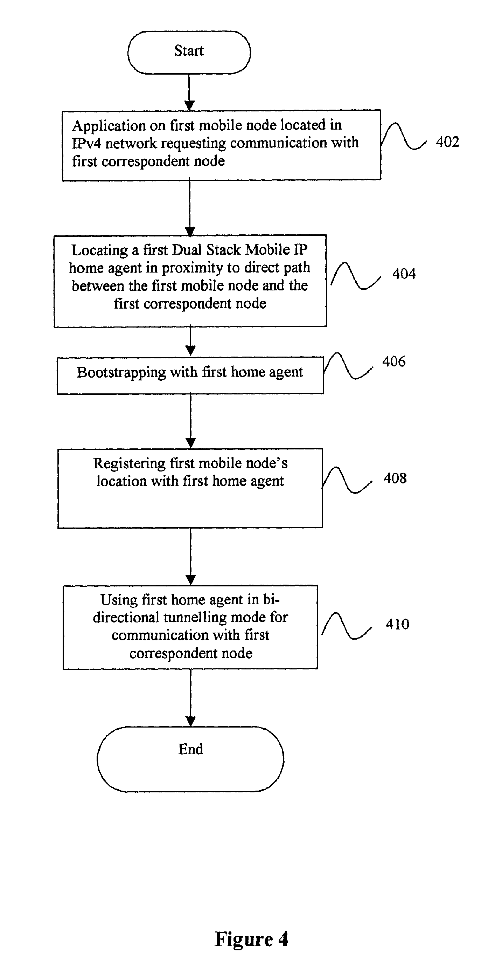

Figure 4 describes the MN initiated method in form of a flow chart. In step 402 communication is requested. The mobile node, which is located in an IPv4 network, then locates a first dual-stack HA in proximity to the direct path between itself and the first CN, which can be located in an IPv6 network, in step 404. To do this the methods described above or other methods using a distance metric, such as Quality of Service (QoS), the number of hops and/or packet delays can be used. In step 406 the MN bootstraps with the HA. This includes that the IPsec security association is set up and the HoA is assigned before authentication and authorization with Mobility Service Authoriser (MSA) is carried out. In step 408 the MN's location is registered with the first home agent, which is then used in bi-directional tunnelling mode for communication with the CN in step 410.

For subsequent sessions with the same CN or with other CNs in this network or in nearby networks, the tunnel to the RO-HA can be re-used. Upon movement, the MN sends BU messages to HA1 as well as HA2.

### CN-initiated communication sessions

An active MN which is not at home is registered with at least one HA. The MN's HoA corresponding to this HA must be known by a CN to be reachable by this CN. This can, e.g., be achieved by publishing the HoA in DNS (Domain Name Server). Since such HAs are mainly used by the MN to be reachable, they are from now on called IP-Reachability (IR)-HAs. In the CN-intiated case, the CN selects one of MN's IR-HoAs (i.e., HoAs belonging to one of the MN's IR-HAs), e.g., by querying DNS with the MN's host name, to contact the MN. The corresponding IR-HA may not provide a short route. Hence, the MN may decide to optimize the route, but it can only do so when the session is already active.

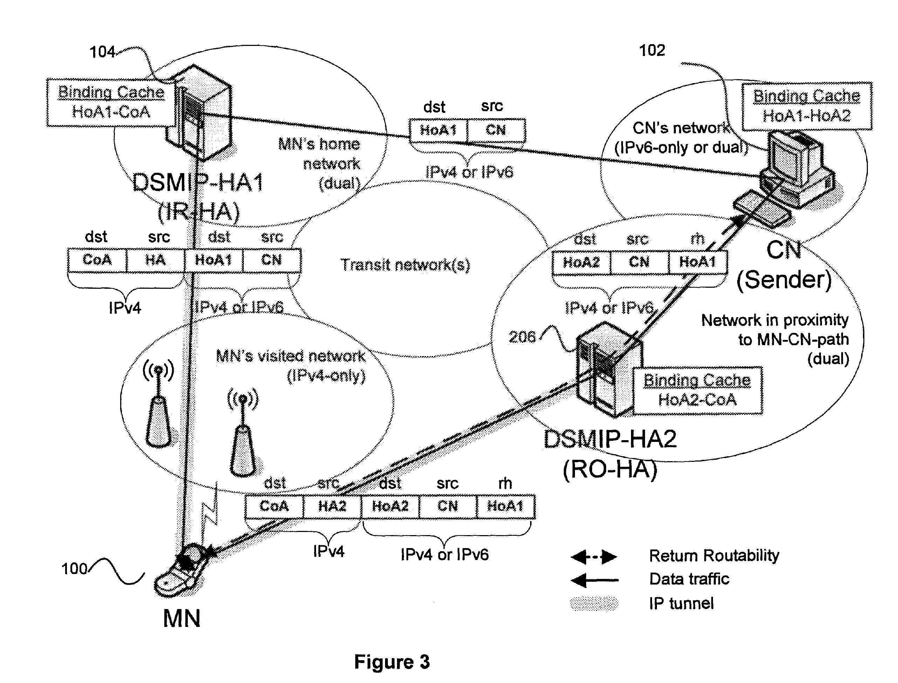

After first data packets (either IPv4 or IPv6) from a CN are received by MN 100 over the IR-HA 104 (Figure 3), the MN 100 may decide to optimize the route (e.g., depending on the distance to the IR-HA 104 from which the packets were received). Therefore, the MN 100 discovers and bootstraps with a DMSIP-HA 206, which is preferably located close to the direct path between MN 100 and CN 102. This HA is again a RO-HA as defined in the MN-initiated case (HA2 in Figure 3). Note that the RO-HA 206 should rather be located close to CN 102 than to MN 100 if the MN's mobility is very high in order to prevent frequent bootstrapping.

After bootstrapping, the MN 100 registers with the RO-HA and starts the return routability procedure with the CN over the (IPv4-based) reverse tunnel to the RO-HA 206. The MN uses the IR-HoA (HoA1) as HoA and the RO-HoA (HoA2) as CoA in CoTi and BU messages and sends those messages (with IPv6 headers) to the CN 102 over the (IPv4-based) reverse tunnel to RO-HA 206. BU messages sent to HAs still contain the "real" CoA. Hence, data packets sent by CN 102 are routed to RO-HA 206 using the type 2 routing header and tunnelled to the MN 100 including the routing header. Hence, from CN's point of view the MN 100 is located in the network of RO-HA 206. Consequently, the route is now optimized without breaking the session and IPv4 traversal is provided. Since neither HAs nor CNs have to be modified, the solution is easy to deploy and no transition issues arise.

The MN's HoAs as well as the CN address can either be an IPv4 or an IPv6 address, whereas the "real" MN's CoA is an IPv4 address. To include IPv4 HoAs in routing header or HoA option, they can be represented as IPv4-mapped or IPv4-compatible IPv6 addresses (see RFC3513)

Figure 3 shows the path and addresses in case the MN sends data packets over the reverse tunnel to the RO-HA (HA2) 206. The packets contain the IR-HoA (HoA1) in the HoA option and RO-HoA (HoA2) 206 as source address in the inner IP header. Note that this is different from RFC3775, which prescribes that the CoA is used as source address in route optimization mode.

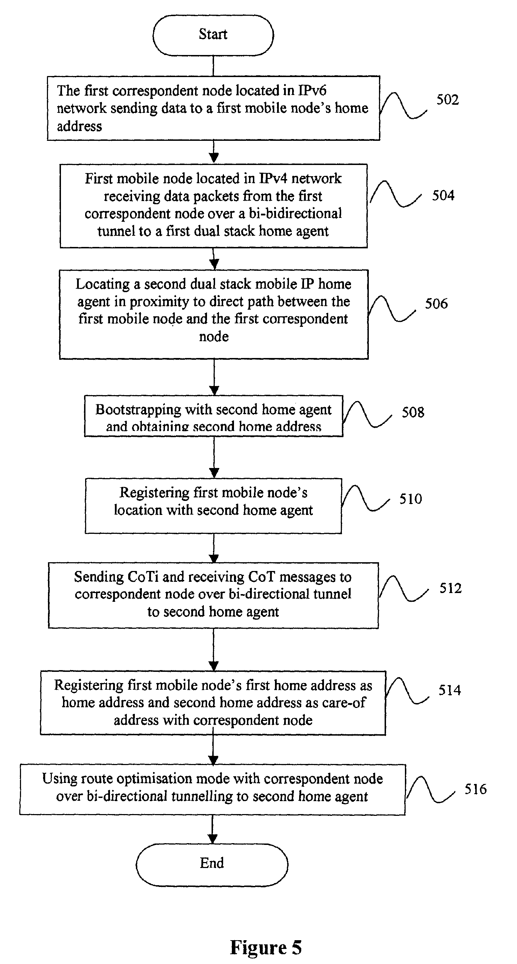

Figure 5 is a flow chart depicting the CN initiated case. After communication is requested in step 502 the MN, which is located in an IPv4 network, receives data packets from the first CN in step 504. A second dual stack HA in proximity to the direct path between the first MN and first CN is located in step 506 and bootstrapping with the second HA is carried out in step 508. In step 510 the first MN's location is registered with the second HA and CoT and CoTi messages are sent to the correspondent node over the bi-directional tunnel to the second home agent in step 512. A home address belonging to the second HA's network is registered as first MN's location with the CN in step 514, and in step 516 route optimization mode is used,̅ with the MN's second HoA as CoA.

For subsequent sessions with the same CN or with other CNs in this network or in nearby networks, the tunnel to the RO-HA (HA2) can be re-used. Upon movement, the MN sends BU messages to the IR-HA as well as the RO-HA. However, it does not send a BU message to the CN, as it would usually do in route optimization mode according to RFC3775. Instead, it only sends a BU to CN if it changes the bi-directional tunnel underlying the route optimization mode from RO-HA to another RO-HA (and periodically to prevent the binding lifetime to expire).

Besides the benefit of enabling optimized routing in IP version transition scenarios, the invention also allows the optimized routing of IPv4 traffic. Although this is not directly related to IP version transition, it is something that is not supported by Mobile IPv4. Since the invention does neither require any changes to HA or CN operation nor to any signalling message formats, the invention is very easy to deploy and no transition issues arise during deployment.

Although this invention is described with respect to a packet-switched system running the IPv4 and IPv6 protocols, the invention is not limited to these protocols. Instead, it is applicable to systems running any mobility management protocol, which support both routing of data packets through a mobility anchor and routing of data packets without passing through the anchor.

Instead of running on the mobile node, the mobility management protocol can also run on a proxy node without loss of applicability of this invention. In this case, the proxy node executes all necessary actions described in this document including sending location updates to the network on behalf of the mobile node. Examples of such protocols are any kinds of Proxy Mobile (e.g., [K. Chowdhury, "Network Based Layer 3 Connectivity and Mobility Management for IPv4", draft-chowdhury-netmip4-00.txt, February 2006] or [K. Chowdhury, A. Singh, "Network Based Layer 3 Connectivity and Mobility Management for IPv6", draft-chowdhury-netmip6-00.txt, February 2006]) or protocols proposed and developed in the netlmm WG (e.g., [J. Wood, K. Nishida, "Edge Mobility Protocol (EMP)", draft-wood-netlmm-emp-base-00.txt, October 2005]).

Another embodiment of the invention relates to the implementation of the above described various embodiments using hardware and software. It is recognised that the various methods mentioned above, as well as the various logical blocks and modules described above may be implemented where performed using computing devices (processors), as for example general purpose processors, Application Specific Integrated Circuits (ASIC), Field Programmable Gate Arrays (FPGA) or other programmable logic devices, etc. The various embodiments of the invention may also be performed or embodied by a combination of these devices.

Further the various embodiments of the invention may also be implemented by means of software modules which are executed by a processors or directly in hardware. Also, a combination of software modules and a hardware implementation may be possible. The software modules may be stored in any kind of computer-readable storage medium, for example RA;, EPROM, EEPROM, flash memory, registers, hard disks, CD-ROM, DVD, etc.

## Claims

1. A method for routing packets in a system of packet-switched networks using different internet protocol versions comprising at least one dual stack capable network entity, at least one mobile node and at least one correspondent node, a first mobile node or a proxy node being configured with at least one topologically correct internet protocol address of a first internet protocol version and being located in a network supporting at least routing of packets having a header of the first internet protocol version, the method comprising the steps of:
requesting (402) communication with a first correspondent node being configured with at least an internet protocol address of a second internet protocol version and being located in a network supporting at least the routing of packets having a header of the second internet protocol version, by an application on the first mobile node,
discovering (404) a dual stack capable network entity between the first mobile node and the first correspondent node, the dual stack capable network entity being located in a network supporting at least the routing of packets to the first mobile node or the proxy node with the packets having a header of the first internet protocol version and the routing of packets to the first correspondent node with the packets having a header of the second internet protocol version;
configuring (406) a first address of the second internet protocol version;; and
using (410) IP-in-IP tunnelling to the dual stack capable network entity, the outer header of the tunnelled packets using the first internet protocol version and the inner header of the tunnelled packets using the second internet protocol version, for communication with the first correspondent node.

2. The method according to claim 1, wherein the step of discovering (404) the dual stack capable network entity is carried out by the first mobile node or by a proxy node on behalf of the first mobile node.

3. The method according to any of claims 1 or 2 wherein the dual stack capable network entity is situated closer to the first correspondent node than to the first mobile node.

4. The method according to any of claims 1 to 3, wherein the step of discovering (404) the dual stack capable network entity comprises the following step:
querying a domain name server for a dual stack capable network entity address, the domain name being constructed from at least a string that indicates that a dual stack capable network entity supporting the routing of packets having the header of the first internet protocol version and packets having the header of the second internet protocol version is required, to find an address of the dual stack capable network entity.

5. The method according to any of claims 1 to 3, wherein the step of discovering (404) the dual stack capable network entity comprises the following steps:
sending a request containing an indication that a dual stack capable network entity supporting the routing of packets having the header of the first internet protocol version and packets having the header of the second internet protocol version is required to a dedicated network entity; and
receiving a reply from the dedicated network entity with an address of the dual stack capable network entity.

6. The method according to any of claims 1 to 3, wherein the step of discovering (404) the dual stack capable network entity comprises the steps of:
setting a flag in a first dynamic host configuration protocol request message to indicate that a dual stack capable network entity supporting the routing of packets having the header of the first internet protocol version and packets having the header of the second internet protocol version is required;
sending the first dynamic host configuration protocol request message to discover the dual stack capable network entity;
sending by a dynamic host configuration protocol server a dynamic host configuration protocol reply containing an address of the dual stack capable network entity;

7. The method according to any of claims 1 to 6, wherein the dual stack capable network entity is re-used in a subsequent communication sessions with the same or other correspondent nodes by skipping the discovering and the configuring steps.

8. The method according to any of claims 1 to 7, wherein the first internet protocol version is IPv4 and the second internet protocol version is IPv6.

9. The method according to any of claims 1 to 7, wherein the first internet protocol version is IPv6 and the second internet protocol version is IPv4.

10. The method according to any of claims 1 to 9, wherein, if the network of the first mobile node and the network of the first correspondent node do not support the same internet protocol version, the method steps are triggered.

11. A mobile node (100) in a system of packet-switched networks using different internet protocol versions comprising at least one dual stack capable network entity and at least one correspondent node, the mobile node (100) being configured with at least one topologically correct internet protocol address of a first internet protocol version and being located in a network supporting at least routing of packets having a header of the first internet protocol version, the mobile node (100) comprising:
an application adapted to request communication with a first correspondent node (102) being configured with at least an internet protocol address of a second internet protocol version and being located in a network supporting at least the routing of packets having a header of the second internet protocol version;
discovering means to locate a (104) dual stack capable network entity between the mobile node (100) and the first correspondent node (102), the dual stack capable network entity (104) being located in a network supporting at least the routing of packets to the mobile node with the packets having a header of the first internet protocol version and the routing of packets to the first correspondent node with the packets having a header of the second internet protocol version;
configuring a first address of the second internet protocol version; and
communication means adapted to use IP-in-IP tunnelling to the dual stack capable network entity, the outer header of the tunnelled packets using the first internet protocol version and the inner header of the tunnelled packets using the second internet protocol version, for communication with the first correspondent node (102).

12. The mobile node of claim 11 adapted to carry out the method steps of claims 2 to 7.

13. A system of packet-switched networks using different internet protocol versions comprising at least one dual stack capable network entity, at least one mobile node and at least one correspondent node, a first mobile node (100) or a proxy node being configured with at least one topologically correct internet protocol address of a first internet protocol version and being located in a network supporting at least routing of packets having a header of the first internet protocol version, the system comprising:
an application on the first mobile node (100) adapted to request communication with a first correspondent node (102) being configured with at least an internet protocol address of a second internet protocol version and being located in a network supporting at least the routing of packets having a header of the second internet protocol version;
discovering means to discover a (104) dual stack capable network entity between the first mobile node (100) and the first correspondent node (102), the dual stack capable network entity (104) being located in a network supporting at least the routing of packets to the first mobile node (100) with the packets having a header of the first internet protocol version and the routing of packets to the first correspondent node (102) with the packets having a header of the second internet protocol version;
configuring means adapted to configure a first address of the second internet protocol version; and wherein
the dual stack capable network entity (104) is adapted to be used in IP-in-IP tunnelling, the outer header of the tunnelled packets using the first internet protocol version and the inner header of the tunnelled packets using the second internet protocol version, for communication with the first correspondent node (102).

14. The system according to claim 35 adapted to carry out the method steps of claims 2 to 7.

15. A computer readable medium storing instructions that, when executed by a processor of a mobile node in a system of packet-switched networks using different internet protocol versions comprising at least one dual stack capable network entity and at least one correspondent node, the mobile node being configured with at least one topologically correct internet protocol address of a first internet protocol version and being located in a network supporting at least routing of packets having a header of the first internet protocol version, cause the mobile node to carry out the following steps:
requesting communication with a first correspondent node being configured with at least an internet protocol address of a second internet protocol version and being located in a network supporting at least the routing of packets having a header of the second internet protocol version, by an application on the first mobile node,
discovering a dual stack capable network entity between the mobile node and the first correspondent node, the dual stack capable network entity being located in a network supporting at least the routing of packets to the mobile node with the packets having a header of the first internet protocol version and the routing of packets to the first correspondent node with the packets having a header of the second internet protocol version;
configuring a first address of the second internet protocol version;
using IP-in-IP tunnelling to the dual stack capable network entity, the outer header of the tunnelled packets using the first internet protocol version and the inner header of the tunnelled packets using the second internet protocol version, for communication with the first correspondent node.
